# EUROPEAN PATENT APPLICATION

(11) **EP 3 093 520 A1**
(43) Date of publication of application: **16.11.2016**
(21) Application number: 14871062.7
(22) Date of filing: 17.12.2014
(51) Int. Cl.: F16F 9/46, F16F 9/32

(54) **SHOCK ABSORBER**

(30) Priority: 20.12.2013 JP 2013263151
(71) Applicant: KYB Corporation, Tokyo 105-6111 (JP)
(72) Inventor: MOCHIZUKI, Takahisa, Tokyo 105-6111 (JP); ITO, Naoki, Tokyo 105-6111 (JP)
(74) Representative: Grünecker Patent- und Rechtsanwälte PartG mbB
(86) International application number: PCT/JP2014/083434
(87) International publication number: WO 2015/093535

(57) **Abstract**

A shock absorber includes a cylinder (1), a piston rod (2), a piston (3), a rod-side chamber (10) and a piston-side chamber (11) partitioned by the piston (3) inside the cylinder (1), an outer tube (4) arranged in an outer circumference of the cylinder (1) to form a cylindrical gap (12) in conjunction with the cylinder (1) to provide a twin-tube structure, a tank externally mounted to the outer tube (4), a reservoir (R) formed in the tank (5), a piston passage (L1) that allows only for a flow of the hydraulic fluid directed from the piston-side chamber (11) to the rod-side chamber (10), an suction passage (L2) that allows only for a flow of the hydraulic fluid directed from the reservoir (R) to the piston-side chamber (11), an discharge passage (L3) that allows the rod-side chamber (10) to communicate with the reservoir (R), a damping valve (V3) provided in the discharge passage (L3), and a connecting member (RH) that connects the outer tube (4) and the tank (5). The discharge passage (L3) communicates with the reservoir (R) via the cylindrical gap (12) and the connecting member (RH).

## Description

### TECHNICAL FIELD

This invention relates to a shock absorber.

### BACKGROUND ART

As a shock absorber used in a suspension for suspending a driving wheel in a vehicle, JP 2009-222136 A discloses a uni-flow type shock absorber including a cylinder, a piston rod that moves in and out of the cylinder, a piston held in a leading end portion of the piston rod and movably inserted into the cylinder in an axial direction, a reservoir externally mounted to the cylinder to store a hydraulic fluid, a piston passage that allows only for a flow directed from a piston-side chamber to a rod-side chamber, an suction passage that allows only for a flow directed from the reservoir to the piston-side chamber, a discharge passage that allows the rod-side chamber to communicate with the reservoir, and a damping valve provided in the middle of the discharge passage. In such a uni-flow type shock absorber, in either an expansion or contraction operation, the hydraulic fluid circulates via the piston-side chamber, the rod-side chamber, and the reservoir in a uni-directional manner. As a result, the uni-flow type shock absorber generates a damping force by virtue of resistance of the damping valve in both the expansion and contraction operations.

### SUMMARY OF INVENTION

The uni-flow type shock absorber disclosed in JP 2009-222136 A has a triple-tube structure including a cylinder, an intermediate tube provided on the outer circumference of the cylinder in an upright manner, and an outer tube provided on the outer circumference of the intermediate tube in an upright manner. In such a shock absorber, a cylindrical gap provided between the intermediate tube and the cylinder serves as a part of the discharge passage. In addition, the cylindrical gap provided between the intermediate tube and the outer tube serves as a reservoir. In each of the side portions of the intermediate tube and the outer tube, a hole penetrating in a thickness direction is provided. In addition, in the side portions of the intermediate tube and the outer tube, tubular sleeves are provided along the edges of each hole in an upright manner, and the damping valve is installed using both the sleeves.

However, such a shock absorber having a triple-tube structure becomes complicated. Even when the sleeve is formed by bending a part of a tubular member of the intermediate tube or the outer tube, or even when the sleeve is formed by welding to the intermediate tube or the outer tube, the fabrication becomes cumbersome, and work efficiency for installing the damping valve is not satisfactory. Furthermore, in such a method of installing the damping valve, it is difficult to install the damping valve near one end of the cylinder in an axial direction. For this reason, due to a dimensional reason of the axial direction, for example, it may be difficult to adjust a vehicle height by providing a suspension spring for elastically supporting a vehicle chassis in the outer circumference of the shock absorber, mounting a jack mechanism in the outer tube, and lifting a spring bearing that supports one end of the suspension spring using a jack mechanism.

In view of the aforementioned problems, it is therefore an object of this invention to provide a shock absorber capable of improving the work efficiency for installing the damping valve and installing the damping valve near one end of the cylinder.

According to one aspect of the present invention, a shock absorber includes a cylinder; a piston rod that is configured to move in and out of the cylinder; a piston held in a leading end portion of the piston rod and inserted into the cylinder movably in an axial direction; rod-side chamber and a piston-side chamber partitioned by the piston inside the cylinder and filled with a hydraulic fluid; an outer tube arranged on an outer circumference of the cylinder, the outer tube forming a cylindrical gap in conjunction with the cylinder to provide a twin-tube structure; a tank externally mounted to the outer tube; a reservoir formed in the tank to store a hydraulic fluid; a piston passage that allows only for a flow of the hydraulic fluid directed from the piston-side chamber to the rod-side chamber; an suction passage that allows only for a flow of the hydraulic fluid directed from the reservoir to the piston-side chamber; an discharge passage that allows the rod-side chamber to communicate with the reservoir; a damping valve provided in the discharge passage; and a connecting member that connects the outer tube and the tank. The discharge passage communicates with the reservoir via the cylindrical gap and the connecting member.

### BRIEF DESCRIPTION OF DRAWINGS

FIG. 1 is a vertical cross-sectional view illustrating an installation state of a shock absorber according to an embodiment of this invention;
FIG. 2 is an enlarged view illustrating main parts of FIG. 1;
FIG. 3A is a partially enlarged vertical cross-sectional view illustrating a damping valve of FIG. 2;
FIG. 3B is an enlarged view illustrating a portion B of FIG. 3A;
FIG. 3C is an enlarged view illustrating a portion C of FIG. 3A; and
FIG. 4 is an enlarged view illustrating main parts of the shock absorber according to a comparative example of this invention.

### DESCRIPTION OF EMBODIMENTS

A description will now be made for a shock absorber S according to an embodiment of this invention with reference to the accompanying drawings. Note that like reference numerals denote like elements throughout some of the drawings.

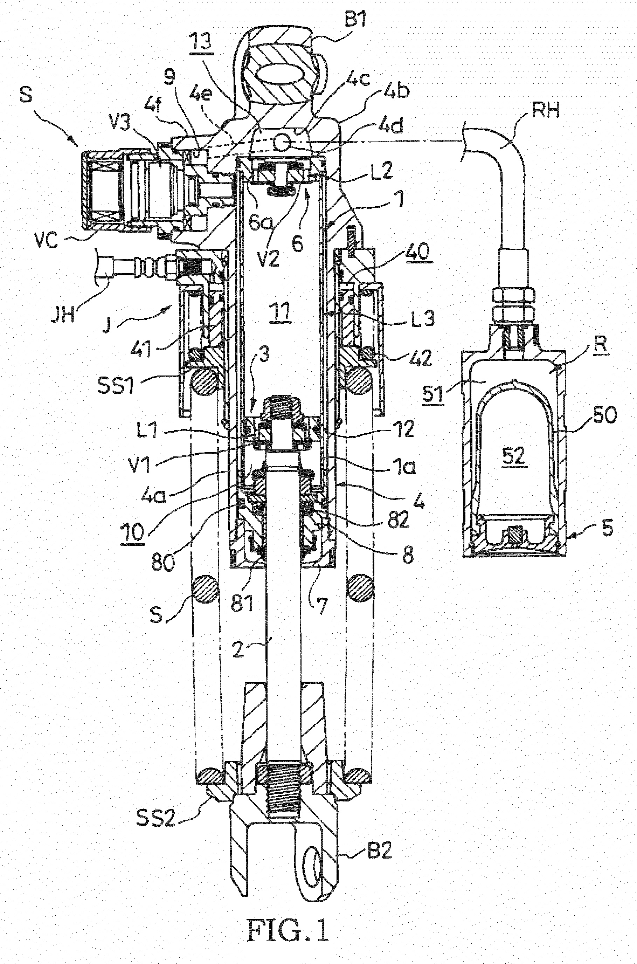

Referring to FIG. 1, a shock absorber S according to an embodiment of this invention includes a cylinder 1, a piston rod 2 that is configured to move in and out of the cylinder 1, a piston 3 held in a leading end portion of the piston rod 2 and movably inserted into the cylinder 1 in an axial direction, a rod-side chamber 10 and a piston-side chamber 11 partitioned by the piston 3 inside the cylinder 1 and filled with a working oil as a hydraulic fluid, a reservoir R externally mounted to the cylinder 1 to store the working oil, a piston passage L1 that allows only for a flow of the working oil directed from the piston-side chamber 11 to the rod-side chamber 10, an suction passage L2 that allows only for a flow of the working oil directed from the reservoir R to the piston-side chamber 11, a discharge passage L3 that allows the rod-side chamber 10 to communicate with the reservoir R, and a damping valve V3 provided in the middle of the discharge passage L3.

The shock absorber S further includes an outer tube 4 arranged on an outer circumference of the cylinder 1 to form a cylindrical gap 12 in conjunction with the cylinder 1 to provide a twin-tube structure, a tank 5 externally mounted to the outer tube 4 to form a reservoir R inside, and a connecting member RH that connects the outer tube 4 and the tank 5 with each other. The discharge passage L3 communicates with the reservoir R via the cylindrical gap 12 and the connecting member RH.

More specifically, the shock absorber S is used in a rear cushion as a suspension of a rear wheel of a saddle-ride type vehicle such as a bicycle or tricycle. According to this embodiment, the rear cushion includes a shock absorber S, a suspension spring S provided in an outer circumference of the shock absorber S, a pair of upper and lower spring bearings SS1 and SS2 that support end portions of the suspension spring S, and a jack mechanism J for adjusting a vehicle height. The suspension spring S is a coil spring that is configured to bias the shock absorber S to expand to elastically support a vehicle chassis and absorb an impact caused by an uneven road surface.

The jack mechanism J includes a jack chamber 40 filled with an incompressible working oil, a vertically movable jack piston 41 that is configured to close a lower opening of the jack chamber 40 and supports the upper spring bearing SS1, a pump (not shown) connected to the jack chamber 40 via a hose JH, and an auxiliary spring 42 that biases the spring bearing SS1 toward the suspension spring S side.

The jack mechanism J supplies or discharges the working oil to or from the jack chamber 40 using a pump to adjust the vehicle height by lifting or lowering the spring bearing SS1 using the jack piston 41. According to this embodiment, since the spring bearing SS1 is also supported by the auxiliary spring 42, the working oil can be easily supplied to the jack chamber 40. It is noted that a configuration of the rear cushion may change appropriately, and it may not have the jack mechanism J. In addition, the shock absorber S according to this embodiment may be used in a variety of purposes other than the rear cushion.

The shock absorber S includes an outer tube 4 formed in a bottomed tubular shape and arranged such that a bottom portion 4b faces upwards, a tubular cylinder 1 provided in an axial center portion of the outer tube 4 in an upright manner, a base member 6 interposed between an upper end of the cylinder 1 and a bottom portion 4b of the outer tube 4 to be fixed, an annular cap 7 screwed to an end portion of the lower opening of the outer tube 4, an annular rod guide 8 fixed to the lower opening of the cylinder 1 with prevented from falling off by the cap 7, a piston rod 2 that is supported by the rod guide 8 and accesses the cylinder 1, a piston 3 held by an upper end portion (leading end portion) of the piston rod 2 and movably inserted into the cylinder 1 in an axial direction, an annular seal ring 80 that seals a gap between the rod guide 8 and the outer tube 4, an annular dust seal 81 and an oil seal 82 that seal a gap between the rod guide 8 and the piston rod 2, a tank 5 provided outside the outer tube 4 and fixed to a vehicle chassis, and a connecting member RH that connects the tank 5 and the outer tube 4 to each other.

Installation members B1 and B2 are fixed to the upper end of the outer tube 4 and the lower end of the piston rod 2, respectively. The upper installation member B1 is connected to a chassis frame serving as a frame of the vehicle chassis. The lower installation member B2 is connected to a swing arm that supports the rear wheel. For this reason, as an impact caused by an uneven road surface is input to the rear wheel, the piston rod 2 moves in and out of the cylinder 1 so that the shock absorber S expands or contracts.

The shock absorber S is an inverted type in which the cylinder 1 is connected to the vehicle chassis side, and the piston rod 2 is connected to the vehicle wheel side. As a result, it is possible to arrange the damping valve V3 upper the spring. However, the shock absorber S may be an upright type in which the cylinder 1 is connected to the vehicle wheel side, and the piston rod 2 is connected to the vehicle chassis side.

The outer tube 4 is internally provided with a rod-side chamber 10 and a piston-side chamber 11 partitioned by the piston 3 inside the cylinder 1, a cylindrical gap 12 formed in an outer circumference of the cylinder 1, and a bottom chamber 13 provided between a hollow 4c formed in the bottom portion 4b of the outer tube 4 and a base member 6. The rod-side chamber 10, the piston-side chamber 11, the cylindrical gap 12, and the bottom chamber 13 are filled with the working oil.

A reservoir R is formed inside the tank 5 externally mounted to the outer tube 4. The reservoir R is partitioned by a partitioning wall member 50 provided in the tank 5 into a fluid chamber 51 and a gas chamber 52. A state that the tank 5 is externally mounted to the outer tube 4 means a state that the tank 5 is not housed in the outer tube 4, and the outer tube 4 is not housed in the tank 5. That is, a state that the tank 5 is externally mounted to the outer tube 4 means a state that the tank 5 is arranged outside the outer tube 4, and the outer tube 4 is arranged outside the tank 5.

The tank 5 is connected to the outer tube 4 using a connecting member RH internally provided with a non-illustrated passage such as a hose or a pipe. The fluid chamber 51 and the bottom chamber 13 communicate with each other via the non-illustrated passage of the connecting member RH. However, if the tank 5 is externally mounted to the outer tube 4, the outer tube 4 and the tank 5 may be integrally formed. In this case, a joining portion between the outer tube 4 and the tank 5 corresponds to the connecting member RH, and a passage for allowing the fluid chamber 51 to communicate with the bottom chamber 13 may be formed in the joining portion.

The partitioning wall member 50 is an elastically deformable bladder. The partitioning wall member 50 can change a volume ratio of the fluid chamber 51 and the gas chamber 52 while it partitions into the fluid chamber 51 and the gas chamber 52. The fluid chamber 51 is filled with the working oil, and the gas chamber 52 is encapsulated with a gas in a compressed state.

Although the working oil is used as a hydraulic fluid in this embodiment, any liquid capable of exerting a damping force may be used instead of the working oil without limiting thereto. Similarly, although the air is used as the gas in this embodiment, an inert gas such as nitrogen may also be used. Any element other than the bladder may also be used as the partitioning wall member 50 if it can change the volume ratio of the fluid chamber 51 and the gas chamber 52 while it partitions into the fluid chamber 51 and the gas chamber 52. For example, the partitioning wall member 50 may be a free piston or a bellows.

The rod-side chamber 10 and the piston-side chamber 11 communicate with each other via a piston passage L1 provided in the piston 3. The piston passage L1 is provided with a check valve V1. For this reason, the piston passage L1 allows only for a flow of the working oil directed from the piston-side chamber 11 to the rod-side chamber 10 and does not allow for the reverse flow.

The piston-side chamber 11 communicates with the bottom chamber 13 via a base passage 6a formed in a base member 6. One end of the first bottom passage 4d provided in the bottom portion 4b of the outer tube 4 communicates with the bottom chamber 13. The connecting member RH communicating with the fluid chamber 51 of the reservoir R is connected to the other end of the first bottom passage 4d. That is, according to this embodiment, the base passage 6a, the bottom chamber 13, the first bottom passage 4d, and the non-illustrated passage formed inside the connecting member RH constitute an suction passage L2 that allows the piston-side chamber 11 to communicate with the reservoir R. The base passage 6a is provided with a check valve V2. For this reason, the suction passage L2 allows only for a flow of the working oil directed from the reservoir R to the piston-side chamber 11 and does not allow for the reverse flow.

The rod-side chamber 10 communicates with the cylindrical gap 12 via a through-hole 1a provided in the lower side of the cylinder 1. An installation hole 9 formed in a boundary between the tubular portion 4a and the bottom portion 4b of the outer tube 4 along a radial direction is opened in the cylindrical gap 12. The installation hole 9 communicates with one end of the second bottom passage 4e formed in the bottom portion 4b of the outer tube 4. The other end of the second bottom passage 4e communicates with the first bottom passage 4d. That is, according to this embodiment, the through-hole 1a of the cylinder 1, the cylindrical gap 12, the installation hole 9, the second bottom passage 4e, the first bottom passage 4d, and the non-illustrated passage provided inside the connecting member RH constitute a discharge passage L3 that allows the rod-side chamber 10 to communicate with the reservoir R. A damping valve V3 that provides resistance to a flow of the working oil passing through the discharge passage L3 is installed in the installation hole 9.

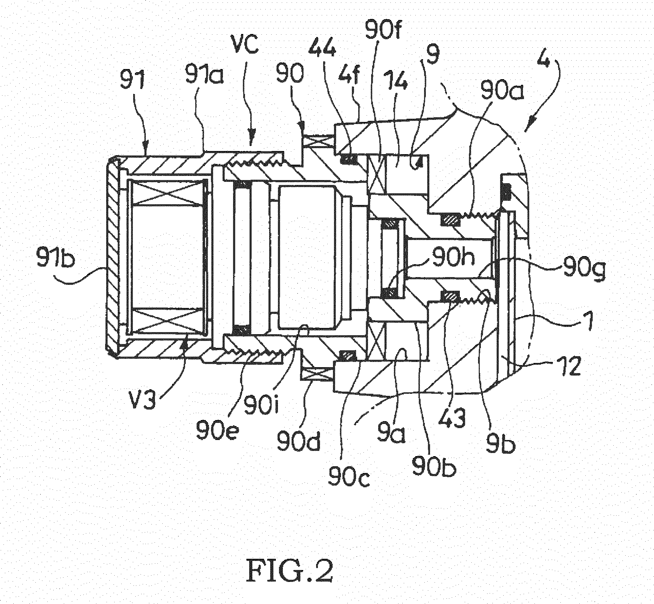

Specifically, the installation hole 9 is provided in a thick portion 4f protruding from the upper side of the outer tube 4 outwards in a radial direction. The installation hole 9 is formed in the thick portion 4f approximately perpendicularly with respect to an axial center line of the tubular portion 4a of the outer tube 4. In addition, as illustrated in FIG. 2, the installation hole 9 includes an insertion hole 9a that adjoins the outer side of the outer tube 4 and has a large diameter and a threaded bore 9b provided coaxially with the center of the insertion hole 9a and penetrates through the outer tube 4 from the insertion hole 9a to the cylindrical gap 12. The threaded bore 9b has a diameter smaller than that of the insertion hole 9a. Female threads are formed in the cylindrical gap 12 side on the inner circumferential surface of the outer tube 4 where the threaded bore 9b is formed.

The damping valve V3 is housed in a valve casing VC. The damping valve V3 and the valve casing VC are integrated with each other to constitute a valve assembly. The valve casing VC includes a tubular casing member 90 connected to the outer tube 4 and a cap member 91 having a bottomed tubular shape to cap an external opening of the casing member 90.

The casing member 90 having a cylindrical shape includes a thread portion 90a, a middle diameter portion 90b, a large diameter portion 90c, a flange portion 90d, a sleeve 90e provided coaxially and sequentially from the cylinder 1 side.

The thread portion 90a is provided with male threads formed on the outer circumferential surface of the leading edge portion and is screwed to the threaded bore 9b of the installation hole 9.

The middle diameter portion 90b has an outer diameter larger than that of the thread portion 90a or the threaded bore 9b and smaller than the diameter of the installation hole 9a. The outer circumference of the middle diameter portion 90b is provided with an annular passage 14 where the working oil can flow to and from the insertion hole 9a. An annular seal ring 43 is installed in the base end of the thread portion 90a. For this reason, it is possible to prevent the working oil from flowing between the annular passage 14 and the cylindrical gap 12 without passing through the damping valve V3.

The large diameter portion 90c has an outer diameter larger than that of the middle diameter portion 90b and is inserted into the installation hole 9a. An annular seal ring 44 is installed in the outer circumference of the large diameter portion 90c. For this reason, it is possible to prevent the working oil from leaking from the installation hole 9 to the outside. A plurality of notches 90f are provided along the circumferential direction in the right-side end of the large diameter portion 90c of FIG. 2, that is, in the cylinder 1 side end of the large diameter portion 90c. The notches 90f allow the inside of the casing member 90 to communicate with the annular passage 14.

The flange portion 90d has an outer diameter larger than that of the large diameter portion 90c or the insertion hole 9a and abuts on the left surface of the thick portion 4f of the outer tube 4 in FIG. 2. Male threads are formed on the outer circumferential surface of the sleeve 90e.

The casing member 90 includes an inlet hole 90g that is formed to extend from the thread portion 90a to an approximate axial center of the middle diameter portion 90b and is opened to the cylindrical gap 12, a holding hole 90h that communicate with the inlet hole 90g, has a diameter larger than that of the inlet hole 90g, and extends from the middle diameter portion 90b to the large diameter portion 90c, and a retaining hole 90i that communicates with the holding hole 90h, has a diameter larger than that of the holding hole 90h, extends from the large diameter portion 90c to the sleeve 90e, and is opened to the outside. The retaining hole 90i communicates with the annular passage 14 via the notches 90f. As a result, the working oil of the cylindrical gap 12 flows to the inside of the casing member 90 from the inlet hole 90g. The working oil inside the casing member 90 is guided from the notches 90f to the annular passage 14 via the damping valve V and is further guided to the reservoir R via the second bottom passage 4e (FIG. 1).

The cap member 91 constituting the valve casing VC in conjunction with the casing member 90 includes a tubular portion 91a having female threads formed on the inner circumferential surface of the leading end portion and a bottom portion 91b that closes the opening of the tubular portion 91a in the side opposite to the cylinder 1, that is, the left opening in FIG. 2. The bottom portion 91b is caulked and fixed to the left end of the tubular portion 91a in FIG. 2.

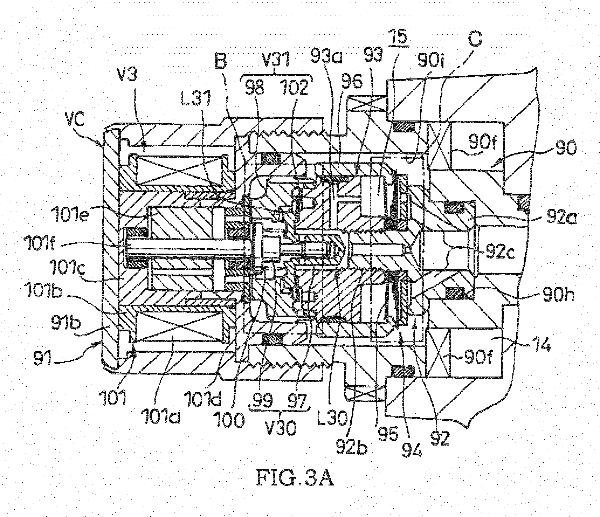

Referring to FIG. 3A, the damping valve V3 housed in the valve casing VC includes a valve seat member 92 having a leading end portion 92a fitted to the holding hole 90h of the casing member 90 and an assembling shaft 92b provided in the axial center portion of the retaining hole 90i in an upright manner, an annular valve housing 93 connected to the assembling shaft 92b of the valve seat member 92, an annular disk-like valve body 94 and a plate spring 95 held between the valve seat member 92 and the valve housing 93 in the outer circumference of the assembling shaft 92b, a tubular spool 96 installed on the outer circumference of the valve housing 93 movably in the axial direction, a bottomed tube-like pilot valve seat member 97 arranged in the opening of the valve housing 93 in the side opposite to the cylinder 1, that is, in the left opening in FIG. 3A, an annular failsafe valve seat member 98 fitted to the outer circumference in the left end of the valve housing 93 in FIG. 3A and arranged in the outer circumference of the pilot valve seat member 97, a pilot valve body 99 that is arranged inside the failsafe valve seat member 98 and moves in and out of the pilot valve seat member 97, a coil spring 100 that is configured to bias the pilot valve body 99 in a direction retreating from the pilot valve seat member 97 , a solenoid 101 arranged in the left side of the pilot valve body 99 in FIG. 3A to apply a thrust force to the pilot valve body 99 against the coil spring 100, and an annular disk-like failsafe valve body 102 having an inner circumferential portion interposed between the valve housing 93 and the pilot valve seat member 97.

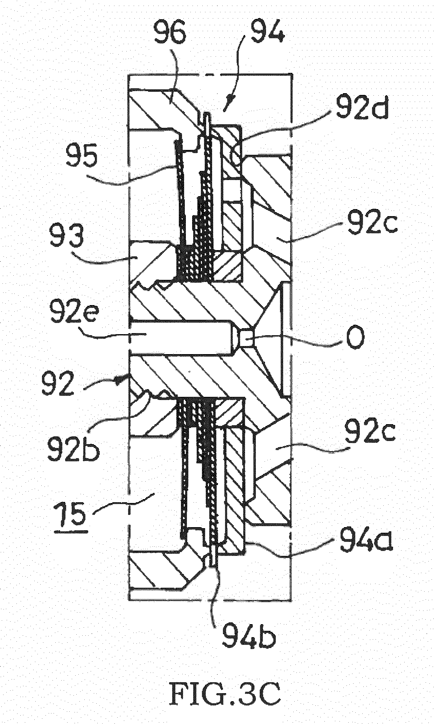

Referring to FIG. 3C, the valve seat member 92 is provided with a port 92c that allows the cylindrical gap 12 to communicate with the annular passage 14 and a valve seat 92d that surrounds the outlet hole of the port 92c. By causing the valve body 94 to leave or seat on the valve seat 92d, it is possible to open or close the port 92c.

The plate spring 95 biases the valve body 94 to a close direction using the spool 96. The plate spring 95 forms a back-pressure chamber 15 in conjunction with the valve housing 93 and the spool 96. For this reason, the valve body 94 is biased to a close direction by virtue of the plate spring 95 and the internal pressure of the back-pressure chamber 15. The valve body 94 has a main valve body 94a and a subsidiary valve body 94b. The valve opening pressure of the main valve body 94a is set to be larger than the valve opening pressure of the subsidiary valve body 94b. For this reason, the valve body 94 can be opened sequentially in the order of the subsidiary valve body 94b and the main valve body 94a. As the pressure of the cylindrical gap 12 corresponding to the upstream side of the port 92c increases, only the subsidiary valve body 94b or both the subsidiary valve body 94 and the main valve body 94a are opened, so that the working oil of the cylindrical gap 12 is guided to the outer circumference side of the valve seat member 92 via the port 92c. In this manner, the working oil guided to the outer circumference side of the valve seat member 92 is guided to the reservoir R via the notches 90f, the annular passage 14, and the second bottom passage 42 (FIG. 1). That is, both the port 92c and the annular passage 14 also serve as a part of the discharge passage L3.

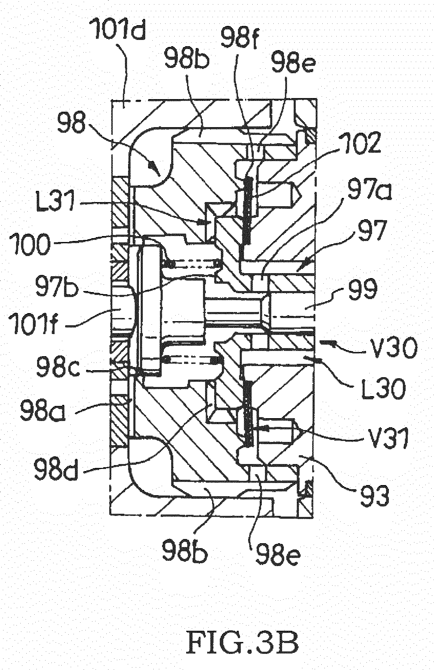

As illustrated in FIG. 3C, the seat member 92 is provided with a center hole 92e that passes through the valve seat member 92 in an axial direction and is opened to the inside of the valve housing 93. As illustrated in FIG. 3A, the valve housing 93 is provided with a communication path 93a that allows the inside of the valve housing 93 to communicate with the back-pressure chamber 15. The center hole 92e, the inside of the valve housing 93, and the communication path 93a serve as a part of the pilot passage L30. An orifice O is provided in the middle of the center hole 92e. For this reason, the pilot passage L30 reduces the pressure of the upstream side of the port 92c and guides it to the back-pressure chamber 15. As illustrated in FIG. 3B, the pilot passage L30 communicates with the annular passage 14 via the through-hole 97a formed in the pilot valve seat member 97 to cause the inside and the outside of the valve housing 93 to communicate with each other, a space between the pilot valve seat member 97 and the pilot valve body 99, a space between the pilot valve body 99 and the failsafe valve seat member 98, the notches 98a and 98b formed in the left side and the outer circumference of the failsafe valve seat member 98 in FIG. 3B, and the outer circumference of the spool 96.

The pilot valve body 99 constitutes a pilot valve V30 in conjunction with the pilot valve seat member 97. As the pilot valve body 99 seats on the valve seat 97b of the pilot valve seat member 97 and closes the pilot valve V30, the communication of the pilot passage L30 is cut off. On the contrary, as the pilot valve body 99 leaves the valve seat 97b, and the pilot valve V30 is opened, the communication of the pilot passage L30 is allowed. The pilot valve body 99 is biased by the coil spring 100 to retreat from the pilot valve seat member 97. For this reason, the pilot valve body 99 retreats from the valve seat 97b and abuts on the inner circumferential protrusion 98c of the failsafe valve seat member 98 while it does not receive a thrust force from the solenoid 101 against the biasing force of the coil spring 100. As a result, the communication of the pilot passage L30 is cut off.

The valve opening pressure of the pilot valve V30 can be controlled by the solenoid 101. The solenoid 101 is housed in the cap member 91 as illustrated in FIG. 3A. The solenoid 101 includes an annular solenoid bobbin 101b fixed to the bottom portion 91b of the cap member 91 with the coil 101a being wound around, a first stator 101c that has a bottomed tube shape and is fitted to the inner circumference of the solenoid bobbin 101b in the left side of FIG. 3A, a second stator 101d having a leading end portion fitted to the inner circumference of the solenoid bobbin 101b in the side opposite to the bottom portion 91b of the cap member 91, that is, the inner circumference of the solenoid bobbin 101b in the right side of FIG. 3A, a cylindrical rotor 101e inserted into the first stator 101c, and a shaft 101f that is fixed to the rotor 101e through the axial center portion of the rotor 101e and abuts on the left end of the pilot valve body 99 in FIG. 3A. A cavity is provided between the first and second stators 101c and 101d. The solenoid 101 is provided with a magnetic path passing through the first stator 101c, the rotor 101e, and the second stator 101d. As the coil 101a is excited, the rotor 101e disposed near the first stator 101c is attracted to the second stator 101d side so that a thrust force directed to the right side of FIG. 3A is exerted to the rotor 101e. For this reason, as the solenoid 101 is excited, a thrust force resisting to the biasing force of the coil spring 100 is exerted to the pilot valve body 99 through the shaft 101f.

In this configuration, as an electric current is supplied to the solenoid 101 to apply a thrust force to the pilot valve body 99, the pilot valve body 99 moves against the biasing force of the coil spring 100 and seats on the valve seat 97b of the pilot valve seat member 97. As a result, the pressure of the cylindrical gap 12 in the upstream side of the pilot passage L30 is applied to the pilot valve body 99. As a resultant force of the force of causing the pilot valve body 99 to leave the valve seat 97b by the pressure of the cylindrical gap 12 and the biasing force of the coil spring 100 exceeds the thrust force of the solenoid 101, the pilot valve V30 is opened, and the pilot passage L30 is opened accordingly. For this reason, by adjusting the thrust force of the solenoid 101 using a magnitude of the electric current supplied to the solenoid 101, it is possible to adjust a magnitude of the valve opening pressure of the pilot valve V30. As the pilot valve V30 is opened, the pressure of the pilot passage L30 in the upstream side of the pilot valve V30 becomes equal to the valve opening pressure of the pilot valve V30. Therefore, the pressure of the back-pressure chamber 15 obtained by guiding the pressure of the pilot passage L30 in the upstream side of the pilot valve V30 is also controlled by this valve opening pressure.

A notch 98d that forms a gap in conjunction with the pilot valve seat member 97 is provided in the right side of the failsafe valve seat member 98 in FIG. 3B. In addition, a through-hole 98e passing through the failsafe valve seat member 98 in a radial direction is provided in a fitting portion (not shown) fitted to the valve housing 93. The notch 98d adjoins the inside of the failsafe valve seat member 98 so as to serve as a part of the failsafe passage L31 branching from the pilot passage L30 in conjunction with the through-hole 98e. The failsafe passage L31 communicates with the annular passage 14 via the notch 98d of the outer circumference of the failsafe valve seat member 98 and the outer circumference of the spool 96.

The failsafe valve body 102 is formed in an annular disk shape and has an inner circumference portion interposed between the pilot valve seat member 97 and the valve housing 93. The failsafe valve body 102 constitutes a failsafe valve V31 in conjunction with the failsafe valve seat member 98. As the outer circumference portion of the failsafe valve body 102 overhanging from the pilot valve seat member 97 to the outside in a radial direction seats on the valve seat 98f of the failsafe valve seat member 98, and the failsafe valve V31 is closed, the communication of the failsafe passage L31 is cut off. On the contrary, as the outer circumference portion of the failsafe valve body 102 leaves the valve seat 98f of the failsafe valve seat member 98, and the failsafe valve V31 is opened, the communication of the failsafe passage L31 is allowed.

In this configuration, as the electric current supply to the solenoid 101 is interrupted, the pilot valve body 99 abuts on the inner circumferential protrusion 98c of the failsafe valve seat member 98 by virtue of the biasing force of the coil spring 100, so that the communication of the pilot passage L30 is cut off. As the pressure of the pilot passage L30 increases to the valve opening pressure of the failsafe valve V31 while the communication of the pilot passage L30 is cut off, the outer circumference portion of the failsafe valve body 102 leaves the valve seat 98f. As a result, the working oil of the pilot passage L30 may leak to the annular passage 14 via the failsafe passage L31. It is noted that the configuration of the damping valve V3 may appropriately change without limiting to that described above.

Next, a description will be made for operations of the shock absorber S according to this embodiment.

During the expansion operation of the shock absorber S where the piston rod 2 retreats from the cylinder 1, the compressed working oil of the rod-side chamber 10 is guided to the reservoir R via the discharge passage L3. In addition, during the expansion operation of the shock absorber S, the working oil corresponding to the volume of the piston rod 2 retreating from the cylinder 1 passes through the suction passage L2 and is guided to the expanding piston-side chamber 11. For this reason, during the expansion operation of the shock absorber S, the fluid chamber 51 of the reservoir R contracts, whereas the gas chamber 52 expands.

In comparison, during the contraction operation of the shock absorber S where the piston rod 2 enters the cylinder 1, the compressed working oil of the piston-side chamber 11 passes through the piston passage L1 and is guided to the expanding rod-side chamber 10. During the contraction operation of the shock absorber S, the working oil corresponding to the volume of the piston rod 2 entering the cylinder 1 passes through the discharge passage L3 and is guided to the reservoir R. For this reason, during the contraction operation of the shock absorber S, the fluid chamber 51 of the reservoir R expands, whereas the gas chamber 52 contracts.

In this manner, the shock absorber S is a uni-flow type in which the working oil circulates via the piston-side chamber 11, the rod-side chamber 10, and the reservoir R in a uni-directional manner in either the expansion or contraction operation. In addition, in either the expansion or contraction operation, the working oil inside the cylinder 1 moves to the reservoir R via the discharge passage L3. For this reason, the shock absorber S generates a damping force caused by the resistance of the damping valve V3 when the working oil passes through the discharge passage L3. It is noted that, by setting the cross-sectional area of the piston rod 2 to a half of the cross-sectional area of the piston 3, it is possible to equalize the amount of the working oil discharged from the cylinder 1 in both the expansion and contraction operations under the same stroke. For this reason, if the resistance of the damping valve V3 to the flow of the working oil is set to be the same, it is possible to set the same damping force for both the expansion and contraction operations.

When the damping valve V3 is operated normally, and the valve opening pressure of the pilot valve V30 is adjusted by supplying the electric current to the solenoid 101, the shock absorber S contracts so that the pressures of the rod-side chamber 10 and the cylindrical gap 12 in the upstream side of the port 92c and the pilot passage L30, respectively, increase. As a result, the pressure between the orifice O and the pilot valve V30 is guided to the back-pressure chamber 15. The internal pressure of the back-pressure chamber 15 is adjusted to the valve opening pressure of the pilot valve V30. By controlling the valve opening pressure using the solenoid 101, it is possible to adjust the pressure applied to the backside of the valve body 94. Therefore, it is possible to control the valve opening pressure for allowing the valve body 94 to open the port 92c.

According to this embodiment, the valve body 94 has the main valve body 94a and the subsidiary valve body 94b so that a two-stage valve open operation can be made. For this reason, a damping coefficient of the damping force generated from the shock absorber S (a ratio of the damping force change amount against the piston velocity change amount) can be changed into a piston velocity domain where only the subsidiary valve body 94b opens the valve, and a piston velocity domain where the main valve body 94a and the subsidiary valve body 94b open the valve due to the increased piston velocity.

When a failure occurs, the electric current supply to the solenoid 101 is interrupted, and the pilot valve body 99 is pressed by the coil spring 100, so that the opening of the failsafe valve seat member 98 in the left side of the FIG. 3A is closed. However, as the pressure inside the pilot passage L30 reaches the valve opening pressure, the failsafe valve 31 is opened. For this reason, the working oil of the pilot passage L30 flows to the annular passage 14 via the failsafe passage L31 and is guided to the reservoir R. As a result, by setting the valve opening pressure of the failsafe valve V31, it is possible to set a characteristic of the damping force of the shock absorber S during a failure as desired.

Next, a description will be made for functional effects of the shock absorber S according to this embodiment.

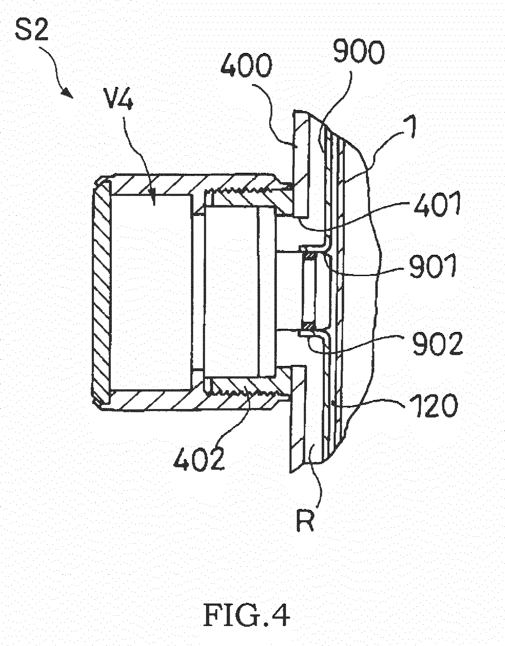

First, for facilitating understanding of the shock absorber S according to this embodiment, a shock absorber S2 of a comparative example will be described with reference to FIG. 4.

A shock absorber S2 having a triple-tube structure includes a cylinder 1, an intermediate tube 900 provided on the outer circumference of the cylinder 1 in an upright manner, and an outer tube 400 provided on the outer circumference of the intermediate tube 900 in an upright manner.

In the shock absorber S2, the cylindrical gap 120 provided between the intermediate tube 900 and the cylinder 1 serves as a part of the discharge passage. In addition, the cylindrical gap provided between the intermediate tube 900 and the outer tube 400 serves as a reservoir R. Holes 901 and 401 penetrating in a thickness direction are provided in the side portions of the intermediate tube 900 and the outer tube 400, respectively. Furthermore, cylindrical sleeves 902 and 402 are provided along the edges of the holes 901 and 401, respectively, in the side portions of the intermediate tube 900 and the outer tube 400, respectively, in an upright manner, and a damping valve V4 is installed using both the sleeves 902 and 402.

However, since the shock absorber S2 having a triple-tube structure, the structure of the shock absorber S2 is complicated. Even when the sleeves 902 and 402 are formed by bending a part of a tubular member included in the intermediate tube 900 or the outer tube 400, or even when the sleeves 902 and 402 are welded to the intermediate tube 900 or the outer tube 400, the fabrication becomes cumbersome, and the work efficiency for installing the damping valve V4 is not satisfactory. Furthermore, in such a method of installing the damping valve V4, it is difficult to install the damping valve V4 near one end of the cylinder 1 in the axial direction. Therefore, due to a dimensional reason of the axial direction, for example, it may be difficult to adjust a vehicle height by providing a suspension spring for elastically supporting a vehicle chassis in the outer circumference of the shock absorber S2, installing a jack mechanism in the outer tube 400, and lifting the spring bearing that supports one end of the suspension spring using the jack mechanism.

In comparison, the shock absorber S according to this embodiment includes the cylinder 1, the piston rod 2 that is configured to move in and out of the cylinder 1, the piston 3 held by the leading end of the piston rod 2 and inserted into the cylinder 1 movably in an axial direction, the rod-side chamber 10 and the piston-side chamber 11 partitioned by the piston 3 inside the cylinder 1 and filled with the working oil, the reservoir R provided outside the cylinder 1 to store the working oil, the piston passage L1 that allows only for a flow of the working oil directed from the piston-side chamber 11 to the rod-side chamber 10, the suction passage L2 that allows only for a flow of the working oil directed from the reservoir R to the piston-side chamber 11, the discharge passage L3 that allows the rod-side chamber 10 to communicate with the reservoir R, and the damping valve V3 provided in the middle of the discharge passage L3.

The shock absorber S having a twin-tube structure includes the outer tube 4 arranged on the outer circumference of the cylinder 1 to form the cylindrical gap 12 in conjunction with the cylinder 1, the tank 5 externally mounted to the outer tube 4 and internally provided with a reservoir R, and the connecting member RH that connects the outer tube 4 and the tank 5. The discharge passage L3 communicates with the reservoir R via the cylindrical gap 12 and the connecting member RH.

According to this embodiment, the reservoir R is provided in the tank 5, and the uni-flow type shock absorber S has a twin-tube structure. Therefore, compared to the triple-tube structure of the shock absorber S2 of the comparative example, it is possible to simplify the structure of the shock absorber S.

Unlike the shock absorber S2, the shock absorber S is not necessary to have the sleeves 902 and 402 in both the intermediate tube 900 and the outer tube 400. Instead, the sleeve 90e may be provided only in the outer tube 4 in an upright manner. For this reason, it is possible to improve work efficiency for installing the damping valve V3 and install the damping valve V3 near one end of the cylinder 1.

Therefore, in the shock absorber S according to this embodiment, it is possible to simplify the structure and improve work efficiency for installing the damping valve V3. Meanwhile, it is possible to install the damping valve V3 near one end of the cylinder 1.

According to this embodiment, the damping valve V3 includes the valve seat member 92 having the port 92c serving as a part of the discharge passage L3, the valve body 94 that opens or closes the port 92c, the back-pressure chamber 15 that biases the valve body 94 to the valve seat member 92 side using the internal pressure, the pilot passage L30 that reduces the pressure of the cylindrical gap 12 in the upstream side of the port 92c and guides it to the back-pressure chamber 15, the pilot valve V30 provided in the middle of the pilot passage L30 to control the pressure inside the back-pressure chamber 15, and the solenoid 101 that controls the valve opening pressure of the pilot valve V30.

In this configuration, by controlling the valve opening pressure of the pilot valve V30 using the solenoid 101, it is possible to change the resistance applied by the damping valve V3 to the flow of the working oil passing through the discharge passage L3. Therefore, it is possible to generate a damping force of the shock absorber S as desired. The configuration of the damping valve V3 may change without limiting to that described above.

According to this embodiment, the tank 5 is internally provided with the partitioning wall member 50. The partitioning wall member 50 partitions reservoir R into the fluid chamber 51 filled with the working oil and the gas chamber 52 in which a gas is sealed in a compressed state. The partitioning wall member 50 is provided to change the volume ratio of the fluid chamber 51 and the gas chamber 52 in the reservoir R.

In this configuration, it is possible to compress the working oil using the gas encapsulated in the gas chamber 52. Therefore, it is possible to improve responsiveness for generating a damping force. According to this embodiment, the partitioning wall member 50 is a bladder. However, any other element may be used as the partitioning wall member 50. For example, the partitioning wall member 50 may be a free piston or a bellows.

According to this embodiment, the shock absorber S has a valve casing VC that houses the damping valve V3. The outer tube 4 is provided with the threaded bore 9b where the valve casing VC is screwed.

In this configuration, it is possible to install the damping valve V3 by boring the threaded bore 9b in the outer tube 4 using a tap. Therefore, it is possible to remarkably simplify the installation work of the damping valve V3. It is noted that the method of installing the damping valve V3 may change appropriately. For example, the outer tube 4 may be chucked using a dedicated tool, male threading may be performed for the outer circumferential surface of the thick portion 4f of the outer tube 4 using a turning machine, and then, the thick portion 4f may be directly screwed to the cap member 91. However, in this case, when a dimensional tolerance of the outer tube 4 is large, for example, when the outer tube 4 is formed through casting or the like, it is difficult to chuck the outer tube 4 using a dedicated tool. Therefore, it is difficult to perform male threading for the thick portion 4f of the outer tube 4. In comparison, when the thread portion 90a is formed through tapping, the fabrication is simplified regardless of a dimensional tolerance of the outer tube 4. Therefore, when the thread portion 90a is formed through tapping, it is possible to remarkably simplify installation of the damping valve V3. This advantage can be obtained without limiting to the method of fabricating the outer tube 4.

Embodiments of this invention were described above, but the above embodiments are merely examples of applications of this invention, and the technical scope of this invention is not limited to the specific constitutions of the above embodiments.

This application claims priority based on Japanese Patent Application No.2013-263151 filed with the Japan Patent Office on December 20, 2013, the entire contents of which are incorporated into this specification.

## Claims

1. A shock absorber comprising:
a cylinder;
a piston rod that is configured to move in and out of the cylinder;
a piston held in a leading end portion of the piston rod and inserted into the cylinder movably in an axial direction;
a rod-side chamber and a piston-side chamber partitioned by the piston inside the cylinder and filled with a hydraulic fluid;
an outer tube arranged on an outer circumference of the cylinder, the outer tube forming a cylindrical gap in conjunction with the cylinder to provide a twin-tube structure;
a tank externally mounted to the outer tube;
a reservoir formed in the tank to store a hydraulic fluid;
a piston passage that allows only for a flow of the hydraulic fluid directed from the piston-side chamber to the rod-side chamber;
an suction passage that allows only for a flow of the hydraulic fluid directed from the reservoir to the piston-side chamber;
an discharge passage that allows the rod-side chamber to communicate with the reservoir;
a damping valve provided in the discharge passage; and
a connecting member that connects the outer tube and the tank,
wherein the discharge passage communicates with the reservoir via the cylindrical gap and the connecting member.

2. The shock absorber according to claim 1, further comprising a valve casing that houses the damping valve,
wherein the outer tube is provided with a threaded bore screwed to the valve casing.

3. The shock absorber according to claim 1, wherein the tank is internally provided with a partitioning wall member, and
the partitioning wall member partitions the reservoir into a fluid chamber filled with a hydraulic fluid and a gas chamber in which a gas is sealed in a compressed state and is capable of changing a volume ratio of the fluid chamber and the gas chamber in the reservoir.

4. The shock absorber according to claim 1, wherein the damping valve has
a valve seat member having a port serving as a part of the discharge passage,
a valve body that is configured to open or close the port,
a back-pressure chamber that is configured to bias the valve body to the valve seat member using an internal pressure,
a pilot passage that is configured to reduce a pressure of the cylindrical gap in the upstream side of the port, the pilot passage configured to guide the reduced pressure to the back-pressure chamber,
a pilot valve provided in the pilot passage to control a pressure inside the back-pressure chamber, and
a solenoid that is configured to adjust a valve opening pressure of the pilot valve.
